# FASCICULE DE BREVET EUROPEEN

(11) **EP 1 824 799 B1**
(45) Date de publication et mention de la délivrance du brevet: **29.07.2009**
(21) Numéro de dépôt: 05811014.9
(22) Date de dépôt: 25.11.2005
(51) Int. Cl.: C05C 3/00, C05B 7/00, C05D 7/00, C05D 1/00

(54) **PROCEDE DE TRAITEMENT DE DECHETS DE POUDRES D'EXTINCTEUR, ET ENGRAIS OBTENU A PARTIR D'UN TEL PROCEDE**
VERFAHREN ZUR BEHANDLUNG VON LÖSCHPULVERABFÄLLEN SOWIE MIT SOLCH EINEM VERFAHREN ERHALTENE DÜNGEMITTEL
METHOD FOR TREATING EXTINGUISHER POWDER WASTES, AND FERTILIZER OBTAINED FROM SUCH A METHOD

(30) Priorité: 25.11.2004 FR 0412520
(43) Date de publication de la demande: 29.08.2007
(73) Titulaire: Valoragri S.A., 11100 Narbonne (FR)
(72) Inventeur: CASSAN, Henri, F-11100 NARBONNE (FR)
(74) Mandataire: Ravina, Bernard
(86) Numéro de dépôt international: PCT/EP2005/056232
(87) Numéro de publication internationale: WO 2006/056602

(56) Documents cités:
- FR-A- 2 723 085
- DATABASE EPODOC EUROPEAN PATENT OFFICE, THE HAGUE, NL; XP002345092 & CZ 11 701 U1 (VANA JAROSLAV ING. CSC; USTAK SERGEJ ING. CSC; HONZIK ROMAN ING; TVARU) 16 janvier 2002 (2002-01-16)
- DATABASE WPI Section Ch, Week 198949 Derwent Publications Ltd., London, GB; Class C04, AN 1989-360802 XP002345946 & JP 01 270583 A (IIDA KOGYO-SHO KK) 27 octobre 1989 (1989-10-27)
- DATABASE WPI Section Ch, Week 198134 Derwent Publications Ltd., London, GB; Class C04, AN 1981-61480D XP002345948 & JP 56 084315 A (MITSUBISHI CHEM IND LTD) 9 juillet 1981 (1981-07-09)

## Description

### Domaine technique de l'invention.

La présente invention est du domaine du traitement des déchets de poudres d'extincteur. Elle a pour objet un procédé de traitement de tels déchets visant à leur valorisation pour éviter leur mise en décharge.

### Etat de la technique.

Les poudres d'extincteur contiennent couramment des produits à base de sulfate et de phosphate d'ammoniaque, et/ou à base de carbonate et de sulfate de potasse. Ces poudres sont habituellement traitées au silicone ou produits isolants analogues pour les protéger de l'humidité, et leur conférer une action optimisée d'extinction.

Se pose le problème de la gestion des déchets de telles poudres. Le stockage de tels déchets est couramment effectué en décharge, de classe deux notamment, ce qu'il est souhaitable d'éviter. En outre, le traitement au silicone des poudres d'extincteur leur confère une fluidité qui rend leur pelletage délicat, avec en corollaire une difficulté de confinement des poudres qui sont volatiles et ont tendance à se disperser.

Pour valoriser les déchets de poudres d'extincteurs, il a été proposé d'utiliser leurs propriétés potentiellement fertilisantes pour les transformer en engrais agricole. Par exemple, le document CZ117010 (XP002345092) divulgue un procédé de transformation des déchets de poudres d'extincteurs, consistant à mélanger ces poudres avec des matières gluantes et liquides provenant de vinasses de distillerie ou de restes de mélasses issues de la production d'acide citrique. Pour compléter l'engrais obtenu, des micro-éléments complémentaires sont ajoutés pour obtenir des résultats agronomiques satisfaisants.
Il a aussi été proposé d'autres produits fertilisants formés à partir de particules pulvérulentes auxquelles sont mélangés des agents liquides et/ou visqueux. Par exemple, le document FR2723085 (MEAC SA) propose un produit combinant un support minéral avec un additif anti-poussière, tel que de la mélasse et/ou de l'eau. Par exemple encore, le document JP01270583 (IIDA KOGYO-SHO KK) propose un engrais en granulé formé à partir de poudres fines de silicate de magnésium mélangées avec des agents visqueux, tels que mélasse ou des résines synthétiques. Par exemple encore, le document JP 2001 158685 (OJI CORN STARCH CO LTD) propose un engrais en granulés constitué de scories métalliques et de poudre d'amidon. Par exemple encore, le document JP 56 084315 (MITSUBISHI CHEM IND LTD) propose un engrais en granulés constitué d'un mélange de poudre de gypse et de mélasse.

De telles techniques consistent dans leur généralité à obtenir un engrais à partir d'un support en granulé auquel est mélangé de la mélasse. Un premier inconvénient réside dans l'utilisation délicate de ces engrais se présentant sous forme de granulés, qui les rendent difficilement pelletables. Cependant, l'utilisation d'un produit pulvérulent susceptible d'être pelletable tend à induire un risque d'irritation pour le manipulateur.

En ce qui concerne plus particulièrement la valorisation des déchets de poudres d'extincteurs, il est souhaitable que leur transformation en engrais soit réalisée à moindre coût. Cependant, la phase de mise en granulé des poudres induit un surcoût de production qui doit être évité, pour rendre l'engrais obtenu compétitif par rapport à des engrais obtenus à partir d'autres produits de base que les déchets de poudres d'extincteurs. En outre, l'engrais obtenu doit être d'une utilisation aisée et notamment permettre son exploitation directe par l'utilisateur final. En outre, il est recherché d'obtenir un engrais susceptible d'être utilisé sur le plus grand nombre possible d'espèces végétales, y compris pour de jeunes plans ou boutures.

Se pose en outre un autre problème à résoudre, qui réside dans l'érosion du sol et dans son appauvrissement en éléments nutritifs. L'engrais utilisé doit être efficace pour permettre au sol de conserver ses qualités physico chimiques. Plus particulièrement, le sol comprend des matières organiques, de l'humus, des éléments fins très réactifs, tel que l'argile, des éléments grossiers siliceux et/ou calcaires, des composés à base de fer, d'aluminium, de calcium de l'eau et de l'air. Le sol, au-delà de l'utilisation d'un engrais, a lui-même un rôle nutritif pour les plantes. Le sol retient la solution du sol, fixe certains éléments nutritifs, abrite des micro-organismes qui contribuent à la transformation des éléments non assimilables en éléments directement assimilables par les plantes. Il est donc souhaitable que l'engrais contribue à l'entretien du sol.

### Objet de l'invention.

Le but général de la présente invention est de proposer un procédé de traitement des déchets de poudres d'extincteur qui facilite leur manipulation et qui permet de les valoriser pour éviter leur mise en décharge à partir de leur recyclage en un produit susceptible d'être commercialisé. Il est plus particulièrement visé par la présente invention de proposer un tel procédé qui permettent d'obtenir un engrais efficace à un prix compétitif, qui soit facilement directement exploitable par l'utilisateur, en évitant tout risque d'irritation, et qui favorise l'entretien du sol.

La démarche inventive de la présente invention a consisté à exploiter les valeurs fertilisantes des poudres d'extincteurs, riches en azote, en phosphate et en potassium pour les recycler en engrais, à usage agricole notamment par épandage. A cet effet, il est proposé dans sa globalité par la présente invention de mélanger les déchets de poudres d'extincteur avec un agent cohésif visqueux, à base de sous produits de sucre notamment et plus particulièrement à base de vinasse ou de mélasse par exemple. A ce stade du traitement, la poudre d'extincteur est rendue suffisamment cohésive pour éviter la dispersion des particules et pour permettre son maniement aisé. Le produit obtenu est alors utilisable par les fabricants d'engrais composé chimique et/ou organique pour l'élaboration d'engrais composés. Dans une deuxième étape, il est proposé de mêler au mélange obtenu un agent asséchant, à base de végétaux broyés et séchés notamment, et plus particulièrement de la pulpe de fruits, pulpe de raisin par exemple. Le produit obtenu est alors directement exploitable par les agriculteurs comme engrais.

Plus généralement, le procédé de la présente invention est un procédé de traitement de déchets de poudres d'extincteur en vue de leur recyclage. Ce procédé comprend l'étape consistant à mélanger les poudres avec un agent cohésif visqueux, pour une utilisation à la fabrication d'engrais. Selon la présente invention, le procédé consiste plus particulièrement à mélanger les poudres avec l'agent cohésif visqueux dans une première étape, puis à assécher le mélange obtenu avec un broyat de végétaux séché.

Grâce à l'assèchement du mélange des poudres et de l'agent visqueux, l'engrais obtenu est facilement directement exploitable par l'exploitant agricole. Cet engrais se présente sous forme pulvérulente, et est soluble dans l'eau pour être aisément exploitable avec un épandeur d'engrais. L'utilisation d'un agent asséchant évite une phase de granulation du produit, avec des gains de coûts de production de 20% à 30%. En outre, l'adjonction d'un broyat de végétaux séchés évite d'avoir à ajouter des micro-éléments au mélange des poudres et de l'agent visqueux. En effet, le broyat de végétaux séchés, pulpe de fruit notamment, est riche en matière organique humifère, et contient par exemple de l'azote organique, dit retard, et de l'acide humique. En outre, le broyat de végétaux séchés permet d'entretenir le sol, en étant exploité comme élément de composition d'engrais organo-minéraux et d'amendements organiques, matières premières hautement humigènes. Plus particulièrement, le broyat de végétaux favorise la rétention d'eau du sol et améliore sa structure, redresse fortement la teneur en matière organique du sol et favorise son réchauffement, améliore la résistance mécanique du sol, à l'encontre de son érosion, et stimule la vie microbienne.

L'agent cohésif est avantageusement un sous produit de sucre, tel que de la mélasse et/ou de la vinasse de betterave.

Le broyat de végétaux est préférentiellement de la pulpe de fruit, pulpe de raisin notamment.

Le mélange de poudres, d'agent cohésif et de broyat de végétaux séchés est notamment réalisé à proportion respective comprise entre 40% à 90% de poudres d'extincteur, entre 5% à 30% d'agent cohésif visqueux. A ce mélange, est ajouté le broyat de végétaux séché à proportion notamment comprise entre 5% et 30%. Idéalement, Le mélange de poudres, d'agent cohésif et de broyat de végétaux séchés est notamment réalisé à proportion respective comprise entre 80% à 80% de poudres d'extincteur, entre 5% à 15% d'agent cohésif visqueux. A ce mélange, est ajouté le broyat de végétaux séché à proportion notamment comprise entre 5% et 20%.

On reconnaîtra dans sa généralité un engrais de la présente invention en ce qu'il est composé de poudres d'extincteur en proportion comprise entre 40% et 90%, d'agent cohésif entre 5% et 30% et de broyat végétaux entre 5% et 30%.

Cet engrais est plus particulièrement composé d'un mélange de poudres d'extincteur, de sous produit de sucre et de broyat de végétaux séchés. Grâce à ces dispositions, l'engrais obtenu se présente sous forme d'une poudre fluide mais non poussiéreuse, évitant un effet irritant pour les yeux et les muqueuses, et permettant un épandage par l'exploitant agricole.

L'engrais obtenu dose notamment, selon un premier exemple 10% d'azote et 20% d'acide phosphorique ou encore selon un autre exemple de 7% à 9% d'azote, dont 0,6% d'azote organique, et de 7% à 12% d'oxyde de phosphore, et de 0,4% à 1,4% de potasse.

L'engrais obtenu est aisément soluble à l'eau et est exploitable à partir des épandeurs d'engrais courant du commerce.

## Revendications

1. Procédé de traitement de déchets de poudres d'extincteur à base de sulfate et de phosphate d'ammoniaque et/ou de carbonate et de sulfate de potasse, en vue de leur recyclage, ce procédé comprenant l'étape consistant à mélanger les poudres avec un agent cohésif visqueux pour une utilisation à la fabrication d'engrais, **caractérisé en ce qu'**il consiste plus particulièrement à mélanger les poudres avec un agent cohésif visqueux, et à assécher le mélange avec un broyat de végétaux séchés.

2. Procédé de traitement de déchets de poudres d'extincteur selon la revendication 1, **caractérisé en ce que** l'agent cohésif est un sous produit de sucre.

3. Procédé de traitement de déchets de poudres d'extincteur selon la revendication 2, **caractérisé en ce que** l'agent cohésif est de la mélasse.

4. Procédé de traitement de déchets de poudres d'extincteur selon la revendication 2, **caractérisé en ce que** l'agent cohésif est de la vinasse de betterave.

5. Procédé de traitement de déchets de poudres d'extincteur selon l'une quelconque des revendications précédentes, **caractérisé en ce que** le broyat de végétaux est de la pulpe de fruit.

6. Procédé de traitement de déchets de poudres d'extincteur selon la revendication 5, **caractérisé en ce que** le broyat de végétaux est de la pulpe de raisin.

7. Procédé de traitement de déchets de poudres d'extincteur selon l'une quelconque des revendications précédentes, **caractérisé en ce que** le mélange de poudre, d'agent cohésif et de broyat de végétaux séchés, est réalisé à proportion respective comprise entre 40% à 90% de poudres d'extincteur, entre 5% à 30% d'agent cohésif visqueux, et entre 5% et 30% de broyat de végétaux.

8. Engrais obtenu à partir d'un procédé de traitement de poudres d'extincteur à base de sulfate et de phosphate d'ammoniaque et/ou de carbonate et de sulfate de potasse selon l'une quelconque des revendications 1 à 7, **caractérisé en ce qu'**il est composé de poudres d'extincteur en proportion comprise entre 90% et 40%, d'agent cohésif entre 5% et 30% et de broyat végétaux entre 5% et 30%.

9. Engrais selon la revendication 8, **caractérisé en ce qu'**il est composé d'un mélange de poudres d'extincteur, de sous produit de sucre et de broyat de végétaux séchés.

## Claims

1. Method for the treatment of fire extinguisher powder waste, based on ammonium sulfate and ammonium phosphate and/or potassium carbonate and potassium sulfate for purposes of recycling this method including the step consisting of mixing the powder with a cohesive viscous agent for using it in fertilizer production, **characterized in that** it consists more particularly of mixing the powders with a cohesive viscous agent, and of drying the mixture with dried ground plant material.

2. Method for treating extinguisher powder waste according to Claim 1, **characterized in that** the cohesive agent is a sugar by-product.

3. Method for treating extinguisher powder waste according to Claim 2, **characterized in** the cohesive agent is molasses.

4. Method for treating extinguisher powder waste according to Claim 2, **characterized in that** the cohesive agent is beet vinasse.

5. Method for treating extinguisher powder waste according to any of the preceding claims, **characterized in that** the ground plant material is fruit pulp.

6. Method for treating extinguisher powder waste according to Claim 5, **characterized in that** the ground plant material is grape pulp.

7. Method for treating extinguisher powder according to any of the preceding claims, **characterized in that** the powder, cohesive agent and dried ground plant material mixture is made in a respective proportion of 40% to 90% extinguisher powder, 5% to 30% cohesive viscous agent and 5% to 30% ground plant material.

8. Fertilizer obtained by a method for treating extinguisher powder based on ammonium sulfate and ammonium phosphate and/or potassium carbonate and potassium sulfate according to any of Claims 1 to 7, **characterized in that** it consists of extinguisher powder in a proportion ranging from 90% to 40%, cohesive agent from 5% to 30% and ground plant material from 5% to 30%.

9. Fertilizer according to Claim 8 **characterized in that** it consists of a mixture of extinguisher powder, sugar by-product and dried ground plant material.

## Patentansprüche

1. Verfahren zur Behandlung von Feuerlöschpulverabfällen auf Basis von Ammoniumsulfat und -phosphat und/oder Kaliumcarbonat und -sulfat, zum Zwecke der Wiederverwendung derselben, wobei das Verfahren den Schritt umfasst, der darin besteht, die Pulver zwecks einer Verwendung zur Düngemittelherstellung mit einem zähflüssigen Bindemittel zu mischen, **dadurch gekennzeichnet, dass** er insbesondere darin besteht, die Pulver mit einem zähflüssigen Bindemittel zu mischen und der Mischung mit einem getrockneten zerkleinerten Pflanzenmaterial Feuchtigkeit zu entziehen.

2. Verfahren zur Behandlung Feuerlöschpulverabfällen nach Anspruch 1, **dadurch gekennzeichnet, dass** das Bindemittel ein Zuckernebenprodukt ist.

3. Verfahren zur Behandlung von Feuerlöschpulverabfällen nach Anspruch 2, **dadurch gekennzeichnet, dass** es sich bei dem Bindemittel um Melasse handelt.

4. Verfahren zur Behandlung von Feuerlöschpulverabfällen nach Anspruch 2, **dadurch gekennzeichnet, dass** es sich bei dem Bindemittel um Rübenvinasse handelt.

5. Verfahren zur Behandlung von Feuerlöschpulverabfällen nach einem beliebigen der vorhergehenden Ansprüche, **dadurch gekennzeichnet, dass** es sich bei dem zerkleinerten Pflanzenmaterial um Obsttrester handelt.

6. Verfahren zur Behandlung von Feuerlöschpulverabfällen nach Anspruch 5, **dadurch gekennzeichnet, dass** es sich bei dem zerkleinerten Pflanzenmaterial um Traubentrester handelt.

7. Verfahren zur Behandlung von Feuerlöschpulverabfällen nach einem beliebigen der vorhergehenden Ansprüche, **dadurch gekennzeichnet, dass** die Mischung aus Pulver, Bindemittel und getrocknetem zerkleinerten Pflanzenmaterial derart hergestellt wird, dass die jeweiligen Anteile bei 40 % bis 90 % an Feuerlöschpulvern, bei 5 % bis 30 % an zähflüssigem Bindemittel und bei 5 % bis 30 % an zerkleinertem Pflanzenmaterial liegen.

8. Düngemittel, das auf Grundlage eines Verfahrens zur Behandlung von Feuerlöschpulvern auf Basis von Ammoniumsulfat und -phosphat und/oder Kaliumcarbonat und - sulfat nach einem beliebigen der Ansprüche 1 bis 7 erhalten wird, **dadurch gekennzeichnet, dass** es sich anteilsmäßig zu 90 % bis 40 % aus Feuerlöschpulvern, zu 5 % bis 30 % aus Bindemittel und zu 5 % bis 30 % aus zerkleinertem Pflanzenmaterial zusammensetzt.

9. Düngemittel nach Anspruch 8, **dadurch gekennzeichnet, dass** es sich aus einer Mischung von Feuerlöschpulvern, von Zuckernebenprodukt und von getrocknetem zerkleinerten Pflanzenmaterial zusammensetzt.
